# EUROPEAN PATENT APPLICATION

(11) **EP 4 053 818 A1**
(43) Date of publication of application: **07.09.2022**
(21) Application number: 19954107.9
(22) Date of filing: 30.11.2019
(51) Int. Cl.: G08G 1/16, G05D 1/02

(54) **COMMUNICATION METHOD AND APPARATUS**

(71) Applicant: Huawei Technologies Co., Ltd., Shenzhen, Guangdong 518129 (CN)
(72) Inventor: ZHOU, Wei, Shenzhen, Guangdong 518129 (CN)
(74) Representative: Pfenning, Meinig & Partner mbB
(86) International application number: PCT/CN2019/122262
(87) International publication number: WO 2021/103022

(57) **Abstract**

Embodiments of this application provide a communication method and an apparatus, which may be applied to the field of autonomous driving or assisted driving. The method includes: A first terminal device obtains capability information of a surrounding terminal device (for example, a second vehicle), and the first terminal device performs a related operation such as path planning and/or safety threat analysis based on the capability information of the second terminal device, to accurately assess an environmental risk and satisfy a safe driving requirement.

## Description

### TECHNICAL FIELD

Embodiments of this application relate to the field of autonomous driving or assisted driving technologies, and in particular, to a communication method and an apparatus.

### BACKGROUND

With rapid development of artificial intelligence, assisted driving and autonomous driving emerge accordingly. When enabling an assisted driving function or an autonomous driving function, a driving vehicle needs to sense a surrounding driving environment, for example, sense information such as a pedestrian, a vehicle, a lane line, a drivable area, and an obstacle on a driving path, to avoid collision with another vehicle, the pedestrian, or the obstacle, a deviation from the lane line, or the like. At present, how a driving vehicle obtains capability information of another vehicle in a surrounding environment, for example, a maximum braking capability or a maximum acceleration capability of the another vehicle in the surrounding environment, is a current research hotspot.

### SUMMARY

Embodiments of this application provide a communication method and an apparatus, to obtain capability information of a surrounding terminal device to ensure driving safety of a terminal device.

According to a first aspect, an embodiment of this application provides a communication method. The method is applied to a first terminal device side, and includes: A first terminal device determines capability information of a second terminal device; and the first terminal device plans a driving path for the first terminal device and/or performs a safety-related operation on the first terminal device based on the capability information of the second terminal device; or the first terminal device determines a safety parameter based on the capability information of the second terminal device, where the safety parameter is used to perform path planning, a safety-related operation, or the like on the first terminal device, which is not limited.

According to the foregoing method, the first terminal device can obtain capability information of a surrounding device (for example, the second terminal device), so that the first terminal device can perform safe path planning and/or perform a safety-related operation such as braking, speed adjustment, or position adjustment on the first terminal device based on the capability information of the surrounding device, to ensure driving safety.

In a possible design, the first terminal device may determine the capability information of the second terminal device in the following manner: The second terminal device proactively sends the capability information of the second terminal device to the first terminal device, where the proactive sending manner may include a unicast mode, a broadcast mode, a multicast mode, or the like, which is not limited.

According to the foregoing method, in the manner in which the second terminal device proactively sends the capability information of the second terminal device, the first terminal device does not need to request the capability information of the second terminal device, thereby reducing signaling overheads.

In a possible design, the first terminal device may determine the capability information of the second terminal device in the following manner: The first terminal device sends, to the second terminal device, a first request used to request the capability information; and the second terminal sends the capability information of the second terminal device to the first terminal device after receiving the first request.

According to the foregoing method, in the manner in which the second terminal device sends the capability information of the second terminal device only after receiving the request from the first terminal device, the second terminal device can be prevented from sending the capability information of the second terminal device to an unrelated terminal device, thereby protecting privacy of the second terminal device.

In a possible design, the capability information of the second terminal device is carried in a basic safety message BSM for transmission, or the capability information of the second terminal device is carried in a vehicle-to-everything V2X message for transmission.

In a possible design, the first terminal device may determine the capability information of the second terminal device in the following manner: The first terminal device sends a second request to a roadside unit RSU, where the second request is used to request the capability information of the second terminal device; and the first terminal device receives the capability information of the second terminal device sent by the RSU.

According to the foregoing method, the first terminal device can directly request the RSU for the capability information of the second terminal device. In this way, it is easy and relatively fast to obtain the capability information of the second terminal device.

In a possible design, the capability information of the second terminal device is carried in a roadside indication RSI message for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

In a possible design, that the first terminal device plans a driving path for the first terminal device based on the capability information of the second terminal device includes: The first terminal device uses the capability information of the second terminal device as an input for planning control; and the first terminal device plans the driving path for the first terminal device based on the input for planning control.

According to the foregoing method, the driving path is planned for the first terminal device based on the capability information of the second terminal device. In this way, path planning can be safer, and driving safety of the first terminal device can be more effectively ensured.

In a possible design, that the first terminal device performs a safety-related operation on the first terminal device based on the capability information of the second terminal device includes: The first terminal device uses the capability information of the second terminal device as an input for safety threat analysis; and the first terminal device performs the safety-related operation on the first terminal device based on the input for safety threat analysis.

According to the foregoing method, the safety-related operation is performed on the first terminal device based on the capability information of the second terminal device. This ensures driving safety of the first terminal device.

In a possible design, the safety-related operation on the first terminal device includes at least one of braking the first terminal device or adjusting a speed, an acceleration, or a position of the first terminal device.

In a possible design, the first terminal device may send a first response message to the second terminal device, where the first response message is used to respond to the capability information of the second terminal device.

According to a second aspect, a communication method is provided. The method is applied to a second terminal device side, and includes: A second terminal device determines capability information of the second terminal device; and the second terminal device sends the capability information of the second terminal device to a first terminal device or a roadside unit RSU.

According to the foregoing method, all terminal devices send capability information of the terminal devices to the RSU. This helps the RSU manage the capability information of all the terminal devices.

In a possible design, that the second terminal device sends the capability information of the second terminal device to a first terminal device includes: The second terminal device sends the vehicle capability information of the second terminal device in a broadcast mode, a unicast mode, or a multicast mode.

According to the foregoing method, the second terminal device can flexibly send the capability information of the second terminal device.

In a possible design, that the second terminal device sends the capability information of the second terminal device to a first terminal device includes: The second terminal device receives a first request sent by the first terminal device, where the first request is used to request the capability information of the second terminal device; and the second terminal device sends the capability information of the second terminal device to the first terminal device.

According to the foregoing method, the second terminal device sends the capability information of the second terminal device to the first terminal device only when receiving the request from the first terminal device. Compared with blindly sending the capability information of the second terminal device to all surrounding terminal devices, this manner can reduce signaling overheads.

In a possible design, the capability information of the second terminal device is carried in a basic safety message BSM for transmission, or the capability information of the second terminal device is carried in a vehicle-to-everything V2X message.

In a possible design, that the second terminal device sends the capability information of the second terminal device to a roadside unit RSU includes: The second terminal device receives a third request sent by the RSU, where the third request is used to request the capability information of the second terminal device; and the second terminal device sends the capability information of the second terminal device to the RSU.

According to the foregoing method, the second terminal device can send the capability information of the second terminal device to the RSU. This helps the RSU manage the capability information of the second terminal device.

In a possible design, the capability information of the second terminal device is carried in a roadside indication RSI message for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

In a possible design, the second terminal device receives a first response message sent by the first terminal device, where the first response message is used to respond to the capability information of the second terminal device.

According to a third aspect, a communication method is provided. The method includes: A roadside unit RSU receives capability information of a second terminal device sent by the second terminal device; and the RSU sends the capability information of the second terminal device to a first terminal device.

According to the foregoing method, the RSU can manage capability information of all related terminal devices, and send capability information of different terminal devices to related terminal devices. This implements convenient and fast management of the capability information of all the related terminal devices.

In a possible design, that a roadside unit RSU receives capability information of a second terminal device sent by the second terminal device includes: The RSU performs environment detection, and determines a terminal device whose capability information needs to be obtained, where the terminal device whose capability information needs to be obtained includes the second terminal device; the RSU sends a third request to the second terminal device, where the third request is used to request the capability information of the second terminal device; and the RSU receives the capability information of the second terminal device sent by the second terminal device.

In a possible design, the capability information of the second terminal device is carried in a roadside indication RSI for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

According to a fourth aspect, an embodiment of this application provides an apparatus. For beneficial effects thereof, refer to the description of the first aspect. Details are not described herein again. The apparatus may be a terminal device, or may be an apparatus in a terminal device or an apparatus that can be used in cooperation with a terminal device. The apparatus includes a processing unit and a communication unit, and the processing unit and the communication unit may perform corresponding functions in the first aspect. For example:
the processing unit is configured to determine capability information of a second terminal device;
the processing unit is further configured to: plan a driving path for a first terminal device and/or perform a safety-related operation on the first terminal device based on the capability information of the second terminal device; or determine a safety parameter based on the capability information of the second terminal device, where the safety parameter is used to perform path planning, a safety-related operation, or the like on the first terminal device, which is not limited; and
the communication unit is configured to communicate with another device, for example, the second terminal device and an RSU.

In a possible design, when determining the capability information of the second terminal device, the processing unit is specifically configured to control the communication unit to receive the capability information of the second terminal device sent by the second terminal device.

In a possible design, when determining the capability information of the second terminal device, the processing unit is specifically configured to: control the communication unit to send a first request to the second terminal device, where the first request is used to request the capability information of the second terminal device; and control the communication unit to receive the capability information of the second terminal device sent by the second terminal device.

In a possible design, the capability information of the second terminal device is carried in a basic safety message BSM for transmission, or the capability information of the second terminal device is carried in a vehicle-to-everything V2X message for transmission.

In a possible design, when determining the capability information of the second terminal device, the processing unit is specifically configured to: control the communication unit to send a second request to a roadside unit RSU, where the second request is used to request the capability information of the second terminal device; and control the communication unit to receive the capability information of the second terminal device sent by the RSU.

In a possible design, the capability information of the second terminal device is carried in a roadside indication RSI message for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

In a possible design, when planning the driving path for the first terminal device based on the capability information of the second terminal device, the processing unit is specifically configured to: use the capability information of the second terminal device as an input for planning control; and plan the driving path for the first terminal device based on the input for planning control.

In a possible design, when performing the safety-related operation on the first terminal device based on the capability information of the second terminal device, the processing unit is specifically configured to: use the capability information of the second terminal device as an input for safety threat analysis; and perform the safety-related operation on the first terminal device based on the input for safety threat analysis.

In a possible design, the safety-related operation on the first terminal device includes at least one of braking the first terminal device or adjusting a speed, an acceleration, or a position of the first terminal device.

According to a fifth aspect, an apparatus is provided. For beneficial effects thereof, refer to the description of the second aspect. Details are not described herein again. The apparatus may be a terminal device, or may be an apparatus in a terminal device or an apparatus that can be used in cooperation with a terminal device. The apparatus may include a communication unit and a processing unit, and the communication unit and the processing unit may perform corresponding functions in the second aspect. For example:
the processing unit is configured to determine capability information of a second terminal device; and
the communication unit is configured to send the capability information of the second terminal device to a first terminal device or a roadside unit RSU.

In a possible design, when sending the capability information of the second terminal device to the first terminal device, the communication unit is specifically configured to send the vehicle capability information of the second terminal device in a broadcast mode, a unicast mode, or a multicast mode.

In a possible design, when sending the capability information of the second terminal device to the first terminal device, the communication unit is specifically configured to: receive a first request sent by the first terminal device, where the first request is used to request the capability information of the second terminal device; and send the capability information of the second terminal device to the first terminal device.

In a possible design, the capability information of the second terminal device is carried in a basic safety message BSM for transmission, or the capability information of the second terminal device is carried in a vehicle-to-everything V2X message.

In a possible design, when sending the capability information of the second terminal device to the roadside unit RSU, the communication unit is specifically configured to: receive a third request sent by the RSU, where the third request is used to request the capability information of the second terminal device; and send the capability information of the second terminal device to the RSU.

In a possible design, the capability information of the second terminal device is carried in a roadside indication RSI message for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

According to a sixth aspect, an apparatus is provided. The apparatus may be a roadside unit RSU, or may be an apparatus in an RSU or an apparatus that can be used in cooperation with an RSU. The apparatus may include a communication unit and a processing unit, and the communication unit and the processing unit may perform corresponding functions in the third aspect. For example:
the communication unit is configured to receive capability information of a second terminal device sent by the second terminal device; and the processing unit is configured to control the communication unit to send the capability information of the second terminal device to a first terminal device.

In a possible design, when controlling the communication unit to receive the capability information of the second terminal device sent by the second terminal device, the processing unit is specifically configured to: control the communication unit to send a third request to the second terminal device, where the third request is used to request the capability information of the second terminal device; and control the communication unit to receive the capability information of the second terminal device sent by the second terminal device.

In a possible design, the capability information of the second terminal device is carried in a roadside indication RSI for transmission, or the capability information of the second terminal device is carried in a vehicle-to-everything V2X message for transmission.

In a possible design, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

According to a seventh aspect, an apparatus is provided. For beneficial effects of the apparatus, refer to the description of the first aspect. Details are not described herein again. The apparatus includes a processor, configured to implement the method described in the first aspect. The apparatus may further include a memory, configured to store program instructions. The memory is coupled to the processor, and when executing the program instructions stored in the memory, the processor can implement the method according to the first aspect. The apparatus may further include a communication interface. The communication interface is used by the apparatus to communicate with another device. For example, the communication interface may be a transceiver, a circuit, a bus, a module, or another type of communication interface, and the another device may be a second terminal device or an RSU.

According to an eighth aspect, an apparatus is provided. For beneficial effects of the apparatus, refer to the description of the second aspect. Details are not described herein again. The apparatus includes a processor, configured to implement the method described in the second aspect. The apparatus may further include a memory, configured to store program instructions. The memory is coupled to the processor, and when executing the program instructions stored in the memory, the processor can implement the method according to the second aspect. The apparatus may further include a communication interface. The communication interface is used by the apparatus to communicate with another device. For example, the communication interface may be a transceiver, a circuit, a bus, a module, or another type of communication interface, and the another device may be a first terminal device or an RSU.

According to a ninth aspect, an apparatus is provided. For beneficial effects of the apparatus, refer to the description of the third aspect. Details are not described herein again. The apparatus includes a processor, configured to implement the method described in the third aspect. The apparatus may further include a memory, configured to store program instructions. The memory is coupled to the processor, and when executing the program instructions stored in the memory, the processor can implement the method according to the third aspect. The apparatus may further include a communication interface. The communication interface is used by the apparatus to communicate with another device. For example, the communication interface may be a transceiver, a circuit, a bus, a module, or another type of communication interface, and the another device may be a first terminal device or a second terminal device.

According to a tenth aspect, a computer-readable storage medium is provided. The computer-readable storage medium includes instructions. When the instructions are run on a computer, the computer is enabled to perform the method in any one of the first aspect to the third aspect.

According to an eleventh aspect, a computer program product is provided. The computer program product includes instructions. When the instructions are run on a computer, the computer is enabled to perform the method in any one of the first aspect to the third aspect.

According to a twelfth aspect, a chip system is provided. The chip system includes a processor, may further include a memory, and is configured to implement the method in any one of the first aspect to the third aspect. The chip system may include a chip, or may include a chip and another discrete device.

According to a thirteenth aspect, an embodiment of this application provides a system. The system includes at least one of the first terminal device, the second terminal device, or the RSU in any one of the foregoing aspects.

### BRIEF DESCRIPTION OF DRAWINGS

FIG. 1 is a schematic diagram of a network architecture according to an embodiment of this application;
FIG. 2 is another schematic diagram of a network architecture according to an embodiment of this application;
FIG. 3 is a flowchart of a communication method according to an embodiment of this application;
FIG. 4a is a schematic diagram of an application scenario according to an embodiment of this application;
FIG. 4b is another schematic diagram of an application scenario according to an embodiment of this application;
FIG. 5 is a flowchart of a vehicle capability exchanging method according to an embodiment of this application;
FIG. 6 is another flowchart of a vehicle capability exchanging method according to an embodiment of this application;
FIG. 7 is still another flowchart of a vehicle capability exchanging method according to an embodiment of this application;
FIG. 8 is still another flowchart of a vehicle capability exchanging method according to an embodiment of this application;
FIG. 9 is a schematic diagram of a structure of an apparatus according to an embodiment of this application; and
FIG. 10 is a schematic diagram of another structure of an apparatus according to an embodiment of this application.

### DESCRIPTION OF EMBODIMENTS

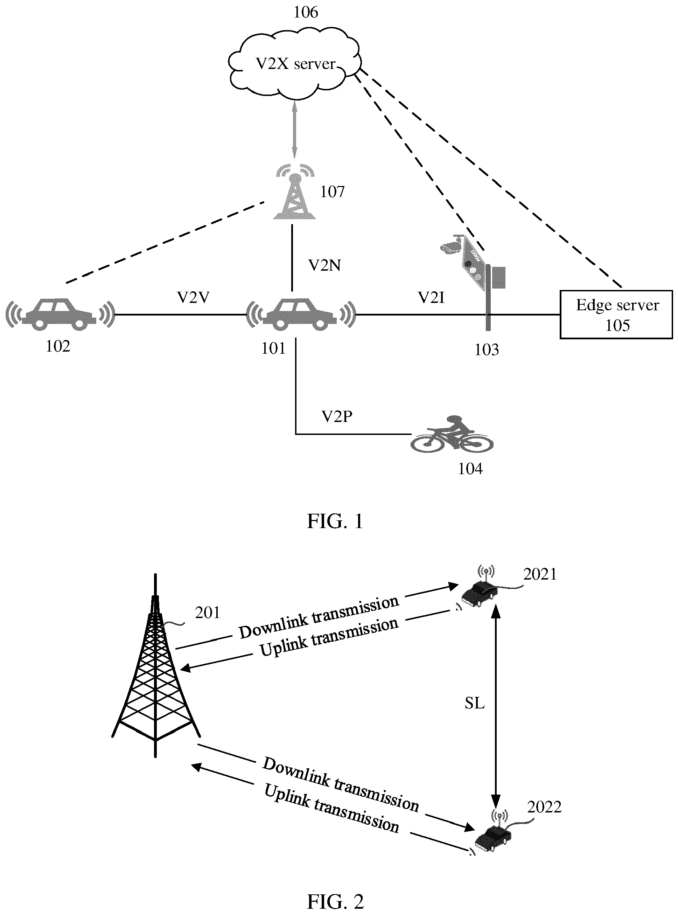

FIG. 1 shows a network architecture applicable to embodiments of this application. The network architecture includes one or more of a first vehicle 101, a second vehicle 102, a roadside unit (road side unit, RSU) 103, a non-motor vehicle/pedestrian 104, an edge server 105, a vehicle-to-everything (vehicle to everything, V2X) server 106, or a network device 107. The edge server 105 may also be referred to as a multi-access edge computing (multi-access edge computing, MEC) server.

The first vehicle 101 may be connected to the second vehicle 102 through a sidelink (sidelink, SL). Communication between the first vehicle 101 and the second vehicle 102 may be referred to as vehicle-to-vehicle (vehicle to vehicle, V2V) communication, and the connection between the first vehicle 101 and the second vehicle 102 may be referred to as a V2V connection. V2V indicates a connection between different vehicles. The first vehicle 101 may be connected to the RSU 103 through an SL. Communication between the first vehicle 101 and the RSU 103 may be referred to as vehicle-to-infrastructure (vehicle to infrastructure, V2I) communication, and the connection between the first vehicle 101 and the RSU 103 may be referred to as a V2I connection. V2I indicates a connection between a vehicle and a road infrastructure, for example, a connection between a vehicle and a traffic light. The first vehicle 101 may be connected to the non-motor vehicle/pedestrian 104 through an SL. Communication between the first vehicle 101 and the non-motor vehicle/pedestrian 104 may be referred to as vehicle-to-pedestrian (vehicle to pedestrian, V2P) communication, and the connection between the first vehicle 101 and the non-motor vehicle/pedestrian 104 is referred to as a V2P connection. V2P may indicate a connection between a vehicle and a pedestrian or a non-motor vehicle. The first vehicle 101 is connected to the V2X server 106 by using the network device 107. For example, the first vehicle 101 may be connected to the network device 107 through a Uu air interface, and the network device 107 may be connected to the V2X server 106 in a wired or wireless manner. The wired manner may be an Ethernet (Ethernet) network, a fiber-optic network, or the like, and the wireless manner may be a Uu air interface or the like. This is not limited. Communication between the first vehicle 101 and the network device 107 may be referred to as vehicle-to-network (vehicle to network, V2N) communication, and the connection between the first vehicle 101 and the network device 107 may be referred to as a V2N connection. V2N may indicate a connection between a vehicle and a network.

Optionally, in the network architecture shown in FIG. 1, the second vehicle 102 may be connected to the V2X server 106 by using the network device 107. The V2X server 106 may be connected to the RSU 103 and the edge server 105 in a wired manner or a wireless manner, and the edge server 106 is configured to manage and control the RSU 103.

FIG. 1 is merely an example for description, and is not intended to limit this application. For example, in the architecture shown in FIG. 1, the RSU may be replaced with a road infrastructure or the like. Alternatively, another quantity of vehicles, non-motor vehicles/pedestrians, RSUs, and the like may be included. Alternatively, the V2X server may be directly connected to the first vehicle 101, the second vehicle 102, and the like through a Uu air interface. This is not limited.

FIG. 2 shows another network architecture applicable to an embodiment of this application. The network architecture includes a network device 201, a first terminal device 2021, and a second terminal device 2022. Data transmission may be performed between the first terminal device 2021 and the network device 201 or between the second terminal device 2022 and the network device 201 on a Uu air interface resource. The air interface resource may include at least one of a time domain resource, a frequency domain resource, or a code domain resource. Specifically, during data transmission between a network device and a terminal device, the network device may send control information to the terminal device through a control channel, for example, a physical downlink control channel (physical downlink control channel, PDCCH), to allocate a data channel, for example, a physical downlink shared channel (physical downlink shared channel, PDSCH) or physical uplink shared channel (physical uplink shared channel, PUSCH) resource, to the terminal device. For example, the control information may indicate a symbol and/or a resource block (resource block, RB) to which the data channel is mapped. Data transmission is performed between the network device and the terminal device on the allocated time-frequency resource through the data channel. The data transmission may include downlink data transmission and/or uplink data transmission. The downlink data (for example, data carried on the PDSCH) transmission may be that the network device sends data to the terminal device, and the uplink data (for example, data carried on the PUSCH) transmission may be that the terminal device sends data to the network device. The data may be data in a broad sense, for example, may be user data, or may be system information, broadcast information, or other information.

In the network architecture shown in FIG. 2, data transmission may alternatively be performed between the first terminal device 2021 and the second terminal device 2022 on a sidelink (sidelink, SL) resource. Similar to an air interface resource, the sidelink resource may also include at least one of a time domain resource, a frequency domain resource, or a code domain resource. Specifically, a physical channel for data transmission between the second terminal device 2022 and the first terminal device 2021 may include a physical sidelink shared channel (physical sidelink shared channel, PSSCH) and/or a physical sidelink control channel (physical sidelink control channel, PSCCH). The PSSCH is used to transmit data, and the PSCCH is used to transmit control information, for example, scheduling assignment (scheduling assignment, SA) information.

FIG. 2 shows an example in which there are one network device and two terminal devices. Optionally, the network architecture may alternatively include a plurality of network devices and may include another quantity of terminal devices in a coverage area of one network device. This is not limited in embodiments of this application.

In the network architecture shown in FIG. 1 or FIG. 2, an SL is a short-range communication manner, usually covers a distance less than 1000 meters, and can implement communication between vehicles, between a vehicle and an RSU, between a vehicle and a pedestrian/non-motor vehicle, and the like. A Uu air interface is a communication interface between a vehicle and a network device or another entity, and may implement communication between the vehicle and the network device. For example, the vehicle may communicate with a core network device by using an access network device, the vehicle may be connected to the access network device through the Uu air interface, and the access network device may be connected to the core network device in a wired manner. The core network device may implement communication with any vehicle or roadside infrastructure by using the access network device, to implement a vehicle-to-network-to-everything (vehicle to network to everything, V2N2X) scenario.

Based on the network architecture shown in FIG. 1 or FIG. 2, an application scenario is provided: In an assisted driving scenario or an autonomous driving scenario, a driving vehicle needs to sense a surrounding environment. To maintain a safe driving environment, the driving vehicle needs to know status information of a surrounding vehicle, for example, a speed and a position. The driving vehicle may detect the status information of the surrounding vehicle by using a vehicle sensor installed on the vehicle. In addition, the driving vehicle may obtain the status information of the surrounding vehicle in a V2X manner. Subsequently, the driving vehicle may plan a possible driving route for an assisted driving function or an autonomous driving function based on obtained information such as a speed and a distance in a surrounding environment with reference to related information such as a vehicle posture of the driving vehicle, provide a corresponding control command with reference to a vehicle dynamics model, and send the control command to an executor for execution, to achieve the assisted driving function and the autonomous driving function.

In a possible solution, a vehicle may periodically broadcast a basic safety message (basic safety message, BSM) to notify another vehicle of status information of the vehicle; and the another vehicle may learn the status information of the related vehicle based on the BSM message, for example, a real-time position, a real-time speed, and a real-time acceleration, to perform path planning and control and the like based on the foregoing information by using a dynamical model.

In a process of performing path planning, safety threat analysis, and the like on the current vehicle, the current vehicle needs to use information such as a speed and a position of the vehicle in an environment, and further needs to learn other related information such as a maximum braking capability of the vehicle in the environment. However, in the foregoing possible solution, the BSM includes only information such as a real-time speed and a real-time acceleration of the current vehicle, and does not include a capability that the vehicle can support, especially a safety-related capability (for example, a maximum acceleration and a maximum braking capability). As a result, environmental risk assessment cannot be accurately performed during safety threat analysis and/or path planning, resulting in a potential safety hazard.

Based on the foregoing solution, embodiments of this application provide a communication method and an apparatus. A principle of the method is as follows: A first terminal device obtains capability information of a surrounding terminal device (for example, a second vehicle), and the first terminal device performs a related operation such as path planning and/or safety threat analysis based on the capability information of the second terminal device, to accurately perform environmental risk assessment and satisfy a safe driving requirement.

It should be noted that, the communication method and the apparatus provided in the embodiments of this application may be applied to a 4th generation (4th generation, 4G) communication system such as a long term evolution (long term evolution, LTE) system; a 5th generation (5th generation, 5G) communication system such as a new radio (new radio, NR) system; various future evolved communication systems such as an Internet of things communication system, a vehicle-to-everything communication system, and a 6th generation (6th generation, 6G) communication system; or the like, which is not limited.

For ease of understanding, terms in embodiments of this application are explained and described, and the explanations and descriptions of the terms are also used as a part of content of embodiments of this application.

### (1) Terminal device

The terminal device may be referred to as a terminal for short, and is a device having wireless sending and receiving functions. The terminal device may be deployed on land, including indoor or outdoor deployment, or handheld or vehicle-mounted deployment, may be deployed on water (for example, on a ship), or may be deployed in the air (for example, on a plane, a balloon, or a satellite). The terminal device may be a wireless terminal device in self-driving (self-driving), a wireless terminal device in transportation safety (transportation safety), a wireless terminal device in a smart city (smart city), or the like. For example, the terminal device may be a motor vehicle, a non-motor vehicle, roadside infrastructure, a roadside unit (road side unit, RSU), a roadside camera, or a roadside traffic light. The terminal device may alternatively be a handheld device having a wireless communication function, a computing device or another processing device connected to a wireless modem, a vehicle-mounted device, a wearable device, a terminal device in a future 5th generation (the 5th generation, 5G) network, a terminal device in a future evolved public land mobile network (public land mobile network, PLMN), or the like. The terminal device may sometimes also be referred to as a terminal device, user equipment (user equipment, UE), an access terminal device, a vehicle-mounted terminal device, a UE unit, a UE station, a mobile station, a mobile console, a remote station, a remote terminal device, a mobile device, a UE terminal device, a wireless communication device, a UE agent, a UE apparatus, or the like. The terminal device may be fixed or mobile. This is not limited in embodiments of this application.

In the embodiments of this application, the apparatus configured to implement a function of a terminal may be various terminal devices listed above, or may be an apparatus that can support the terminal in implementing the function, for example, a chip system or a functional unit. The apparatus may be installed or integrated in the terminal. In embodiments of this application, a chip system may include a chip, or may include a chip and another discrete device. A vehicle is used as an example. One or more of the following apparatuses in the vehicle perform a terminal-related method procedure in the embodiments of this application: a telematics box (Telematics BOX, T-Box), a domain controller (Domain Controller, DC), a multi-domain controller (Multi-Domain Controller, MDC), an on-board unit (On board Unit, OBU), a vehicle-to-everything chip, and the like. In technical solutions provided in the embodiments of this application, an example in which an apparatus configured to implement a function of a terminal is a terminal device and the terminal device is a vehicle is used to describe the technical solutions provided in the embodiments of this application.

### (2) Sidelink (sidelink, SL)

The SL is used for communication between terminal devices. The sidelink may include a physical sidelink shared channel (physical sidelink shared channel, PSSCH) and a physical sidelink control channel (physical sidelink control channel, PSCCH). The PSSCH is used to carry sidelink data (SL data), the PSCCH is used to carry sidelink control information (sidelink control information, SCI), and the SCI may also be referred to as sidelink scheduling assignment (sidelink scheduling assignment, SL SA). The SL SA is data-scheduling-related information, for example, is used to carry information such as resource allocation and/or a modulation and coding scheme (modulation and coding scheme, MCS) of the PSSCH.

Optionally, the sidelink communication may further include a physical sidelink uplink control channel (physical sidelink uplink control channel, PSUCCH). The physical sidelink uplink control channel may also be referred to as a sidelink uplink control channel for short. The physical sidelink uplink control channel may also be referred to as a physical sidelink feedback channel (physical sidelink feedback channel, PSFCH). The physical sidelink feedback channel may also be referred to as a sidelink feedback channel for short. The sidelink uplink control channel or the sidelink feedback channel may be used to transmit sidelink feedback control information (sidelink feedback control information, SFCI). The sidelink feedback control information may also be referred to as sidelink feedback information for short, or may also be referred to as sidelink uplink control information (sidelink uplink control information, SL UCI). The sidelink feedback control information may include at least one of channel state information (channel state information, CSI), hybrid automatic repeat request (hybrid automatic repeat request, HARQ) information, and the like. The HARQ information may include an acknowledgement (acknowledgement, ACK) or a negative acknowledgement (negative acknowledgement, NACK).

The SL may be applied to a vehicle-to-everything (vehicle to X, V2X) scenario, where X may refer to any object. For example, vehicle-to-everything communication may include vehicle-to-vehicle (vehicle to vehicle, V2V) communication, vehicle-to-roadside infrastructure (vehicle to infrastructure, V2I) communication, vehicle-to-pedestrian (vehicle to pedestrian, V2P) communication, and vehicle-to-network (vehicle to network, V2N) communication. The vehicle-to-everything may also be referred to as a cooperative-intelligent transport system (cooperative-intelligent transport system, C-ITS) or the like.

Further, it should be noted that, in the following description of the embodiments of this application, terms such as "first" and "second", for example, "first terminal device" and "second terminal device", are only used for distinguishing between descriptions, cannot be understood as indicating or implying relative importance, and cannot be understood as indicating or implying an order either. "At least one of the following items (pieces)" or a similar expression thereof refers to any combination of these items, including any combination of singular items (pieces) or plural items (pieces). For example, at least one (item) of a, b, or c may represent: a; b; c; a and b; a and c; b and c; or a, b, and c, where a, b, and c each may be in a singular or plural form.

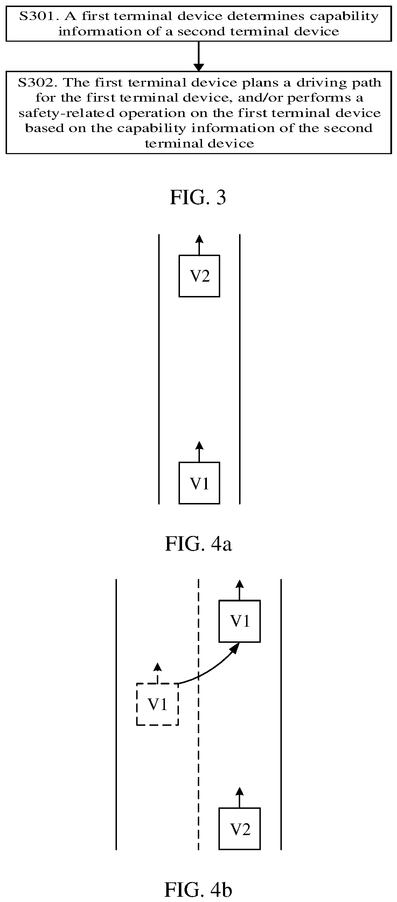

As shown in FIG. 3, a procedure of a communication method is provided. Execution bodies of the procedure may include a first terminal device, a second terminal device, an RSU, and the like. In the method, the first terminal device may be the first vehicle 101 in FIG. 1, the second terminal device may be the second vehicle 102 in FIG. 1, and the RSU may be the RSU 103 in FIG. 1. Alternatively, in the method, the first terminal device may be the first terminal device 2021 in FIG. 2, and the second terminal device may be the second terminal device 2022 in FIG. 2. The procedure includes the following steps.

S301: The first terminal device determines capability information of the second terminal device.

The capability information of the second terminal device may include indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

S302: The first terminal device plans a driving path for the first terminal device and/or performs a safety-related operation on the first terminal device based on the capability information of the second terminal device. Optionally, S302 may be replaced as follows: The first terminal device determines a safety parameter based on the capability information of the second terminal device, where the safety parameter is used to perform path planning, a safety-related operation, or the like on the first terminal device, which is not limited.

For example, the first terminal device may use the capability information of the second terminal device as an input for planning control, and perform an operation such as deceleration or braking. Alternatively, the first terminal device may perform safety threat analysis based on the capability information of the second terminal device, to adjust a current speed, a current position, and the like to satisfy a safe driving requirement. Alternatively, the foregoing process may be described as follows: The first terminal device uses the capability information of the second terminal device as an input for planning control; and the first terminal device plans the driving path for the first terminal device based on the input for planning control. Alternatively, the first terminal device may perform safety threat analysis based on the capability information of the second terminal device, to perform the safety-related operation based on a safety threat analysis result. Alternatively, the first terminal device may use the capability information of the second terminal device as an input for safety threat analysis; and the first terminal device performs the safety-related operation on the first terminal device based on the input for safety threat analysis. The safety-related operation may include at least one of braking the first terminal device or adjusting a speed, an acceleration, or a position of the first terminal device; or the like.

As shown in FIG. 4a, in a vehicle following scenario, the first terminal device is denoted as V1, and the second terminal device is denoted as V2. The first terminal device V1 and the second terminal device V2 travel on a same road, and the first terminal device V1 follows the second terminal device V2. According to the method in S301, the first terminal device V1 may obtain the capability information of the second terminal device V2, where the capability information of the second terminal device V2 may include at least a maximum braking capability of the second terminal device V2; the first terminal device V1 may calculate a safe distance between the first terminal device V1 and the second terminal device V2 based on the maximum braking capability of the second terminal device V2; and the first terminal device V1 always travels within the safe distance range to ensure driving safety.

As shown in FIG. 4b, in a lane changing scenario, the first terminal device is denoted as V1, and the second terminal device is denoted as V2. The first terminal device V1 and the second terminal device V2 travel on different roads. In addition, due to a traveling requirement, the first terminal device V1 needs to change a lane to travel on a road on which the second terminal device V2 travels. Similarly, according to the method in S301, the first terminal device V1 may obtain the capability information of the second terminal device V2, where the capability information of the second terminal device V2 may include at least a maximum acceleration capability of the second terminal device V2. The first terminal device V1 may calculate a safe lane changing zone of the first terminal device V1 based on the maximum acceleration capability of the second terminal device V2, and perform lane changing in the safe lane changing zone to ensure safe lane changing.

Optionally, the procedure shown in FIG. 3 may further include: The first terminal device sends a first response message to the second terminal device, where the first response message is used to respond to the capability information of the second terminal device. For example, when receiving the capability information of the second terminal device, the first terminal device may send the first response message to the first terminal device. Alternatively, the first terminal device sends the first response message and the like to the first terminal device after performing a related operation (for example, path planning, a safety-related operation, or determining a safety parameter) based on the capability information of the second terminal device, which is not limited.

It can be understood that, the first terminal device may directly send the first response message to the second terminal device, or the first terminal device may send the first response message to the second terminal device by using the RSU, which is not limited. The first response message may be carried in a BSM, a V2X message, an RSI, or the like, which is not limited.

### Example 1

The second terminal device may proactively send the capability information of the second terminal device to the first terminal device. For example, the first terminal device may proactively send the capability information of the second terminal device in a manner such as a broadcast mode, a multicast mode, or a unicast mode, which is not limited. Correspondingly, the first terminal device may receive the capability information from the second terminal device. To be specific, a specific implementation of S301 is as follows: The first terminal device receives the capability information of the second terminal device sent by the second terminal device.

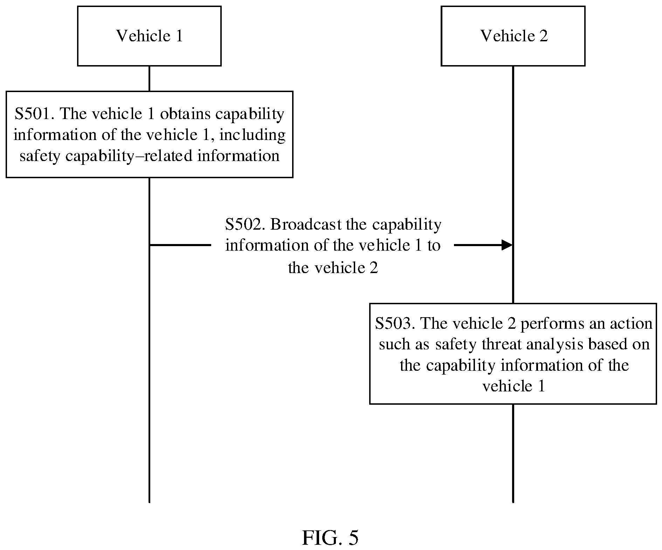

As shown in FIG. 5, a procedure of a vehicle capability exchanging method is provided. The procedure may be a specific implementation of Example 1. A vehicle 1 in the procedure may be the second terminal device in the procedure shown in FIG. 3, and a vehicle 2 may be the first terminal device in the procedure shown in FIG. 3. As shown in FIG. 5, the procedure includes the following steps.

S501: The vehicle 1 obtains capability information of the vehicle 1, where the capability information of the vehicle 1 includes safety capability-related information and the like. The vehicle 1 may obtain the capability information of the vehicle 1 by using a fixed configuration of the vehicle. Alternatively, the vehicle 1 may obtain the capability information of the vehicle 1 and the like by using a sensor. The capability information of the vehicle 1 may include a maximum braking capability, a maximum acceleration, and the like of the vehicle 1, which is not limited.

S502: The vehicle 1 broadcasts the capability information of the vehicle 1 to a surrounding vehicle, for example, the vehicle 2.

The capability information of the vehicle 1 may be carried in a BSM message or a V2X message for transmission, which is not limited. For example, when the capability information of the vehicle is carried in the BSM for transmission, a description of the capability information of the vehicle may be as follows:

```
          BasicSafetyMessage ::= SEQUENCE {
                msgCnt MsgCount,
                id OCTET STRING (SIZE(8)),
                -- vehicle ID
                plateNo OCTET STRING (SIZE(4..16)) OPTIONAL,
                -- Reserved for Electronic Vehicle Identification
                secMark DSecond,
                timeConfidence TimeConfidence OPTIONAL,
                pos Position3D,
                posAccuracy PositionalAccuracy OPTIONAL,
                -- Accuracy for GNSS system
                posConfidence PositionConfidenceSet OPTIONAL,
                -- Realtime position confidence
                transmission TransmissionState,
                speed Speed,
                heading Heading,
                angle SteeringWheelAngle OPTIONAL,
                motionCfd MotionConfidenceSet OPTIONAL,
                accelSet AccelerationSet4Way,
                brakes BrakeSystemStatus,
                size VehicleSize,
                vehicleClass VehicleClassification,
                -- VehicleClassification includes BasicVehicleClass and other extendible type
                safetyExt VehicleSafetyExtensions OPTIONAL,
                emergencyExt VehicleEmergencyExtensions OPTIONAL,
                profile Profile ... }
```

The capability information of the vehicle is described in (profile Profile). The following describes profile Profile by using an example in which profile Profile includes safety capability information of the vehicle and the safety capability information includes a maximum braking capability and a maximum acceleration capability. For example, profile Profile is described in detail as follows:

```
          Profile ::= SEQUENCE {
                long MaxAcceleration,
                -- Along the Vehicle Longitudinal axis
                lat MaxAcceleration,
                -- Along the Vehicle Lateral axis
                vert MaxVerticalAcceleration,
                -- Along the Vehicle Vertical axis
                long MinAcceleration,
                -- Along the Vehicle Longitudinal axis
                lat MinAcceleration,
                -- Along the Vehicle Lateral axis
                vert MinVerticalAcceleration,
                -- Along the Vehicle Vertical axis
                long MaxBrake,
                -- Along the Vehicle Longitudinal axis
                lat MaxBrake,
                -- Along the Vehicle Lateral axis
                vert MaxBrake,
                -- Along the Vehicle Vertical axis
                long MinBrake,
                -- Along the Vehicle Longitudinal axis
                lat MinBrake,
                -- Along the Vehicle Lateral axis
                vert MinBrake,
                -- Along the Vehicle Vertical axis ... }
```

S503: The vehicle 2 performs an action such as safety threat analysis based on the capability information of the vehicle 1. For example, the vehicle 2 may perform more accurate safety threat analysis based on the capability information of the vehicle 1 in combination with a position, a speed, and the like of the vehicle 2.

According to the vehicle capability exchanging method in this embodiment of this application, a driving vehicle can obtain vehicle capability information of a surrounding vehicle, so that the driving vehicle can perform accurate safety threat analysis. This improves driving safety and eliminates a potential driving safety risk.

### Example 2

A first vehicle may perform detection on a surrounding environment, and determine a vehicle whose capability information needs to be obtained; and the first vehicle may send vehicle capability request information to the vehicle whose capability information needs to be obtained. The vehicle that receives the request may send the capability information of the vehicle to the first vehicle. In the following description, an example in which the vehicle whose capability information needs to be obtained by the first vehicle includes a second vehicle is used for description. A specific implementation of S301 may be as follows: The first vehicle sends a first request to the second vehicle, where the first request is used to request capability information of the second vehicle; and when receiving the first request, the second vehicle sends the capability information of the second vehicle to the first vehicle. The capability information of the second vehicle may be carried in a BSM, carried in a V2X message, or separately transmitted, which is not limited. Optionally, S301 may further include: The first terminal device performs detection on a surrounding environment; and the first terminal device determines, based on an environment detection result, a vehicle whose capability information needs to be obtained, where the vehicle whose capability information needs to be obtained includes the second terminal device.

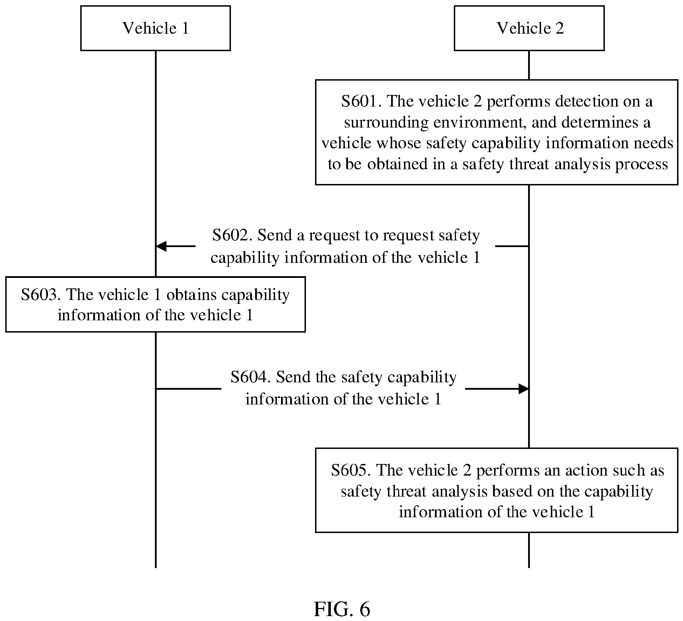

As shown in FIG. 6, a procedure of a vehicle capability information exchanging method is provided. In the procedure, a vehicle 1 may be the second vehicle in FIG. 3, and a vehicle 2 may be the first vehicle in FIG. 2. The procedure includes the following steps.

S601: The vehicle 2 performs detection on a surrounding environment, and determines a vehicle whose safety capability information needs to be obtained in a safety threat analysis process. It should be noted that, in this embodiment of this application, for one vehicle, safety capability information needs to be obtained only once, and does not need to be repeatedly obtained.

S602: The vehicle 2 sends a request to the vehicle 1 to request vehicle capability information of the vehicle 1, where the request message may be a specific BSM message, a separate V2X message, or the like, which is not limited.

S603: The vehicle 1 obtains the capability information of the vehicle 1, where the capability information of the vehicle 1 includes safety-related information such as a maximum braking capability and a maximum acceleration capability.

For example, the vehicle 1 may obtain the capability information of the vehicle 1 by using a sensor or obtain the capability information of the vehicle 1 by using a fixed configuration of the vehicle 1, which is not limited.

S604: The vehicle 1 sends safety capability information of the vehicle 1 to the vehicle 2. For example, the vehicle 1 may send the capability information of the vehicle 1 by using a specific BSM message or a separate V2X message.

S605: The vehicle 2 performs an action such as safety threat analysis based on the capability information of the vehicle 1.

According to the vehicle capability exchanging method in this embodiment of this application, a driving vehicle can obtain vehicle capability information of a surrounding vehicle, so that the driving vehicle can perform accurate safety threat analysis. This improves driving safety and eliminates a potential driving safety risk.

### Example 3

The first terminal device performs detection on a surrounding environment, and determines a terminal device whose capability information needs to be obtained. Then, the first terminal device may request the capability information of the terminal device from the RSU. The RSU may send the capability information of the terminal device to the first terminal device. The capability information of the terminal device may be carried in a roadside indication (road side indication, RSI) message, or the capability information of the terminal device may be carried in a V2X message, which is not limited. In the following description, an example in which the terminal device whose capability information needs to be obtained by the first terminal device includes the second terminal device is used for description. A specific implementation of S301 may be as follows: The first terminal device sends a second request to the RSU, where the second request is used to request capability information of the second terminal device. The RSU sends capability information of a second vehicle to the first terminal device. Similarly, the capability information of the second vehicle may be carried in an RSI, or the capability information of the second vehicle may be carried in a V2X message. In this embodiment of this application, the RSU may obtain capability information of a surrounding terminal device by requesting the capability information, or a surrounding terminal device may proactively report capability information of the terminal device to the RSU. Optionally, S301 may further include: The first terminal device performs detection on a surrounding environment; and the first terminal device determines, based on a detection result of the surrounding environment, a vehicle whose capability information needs to be obtained, where the vehicle whose capability information needs to be obtained includes the second terminal device.

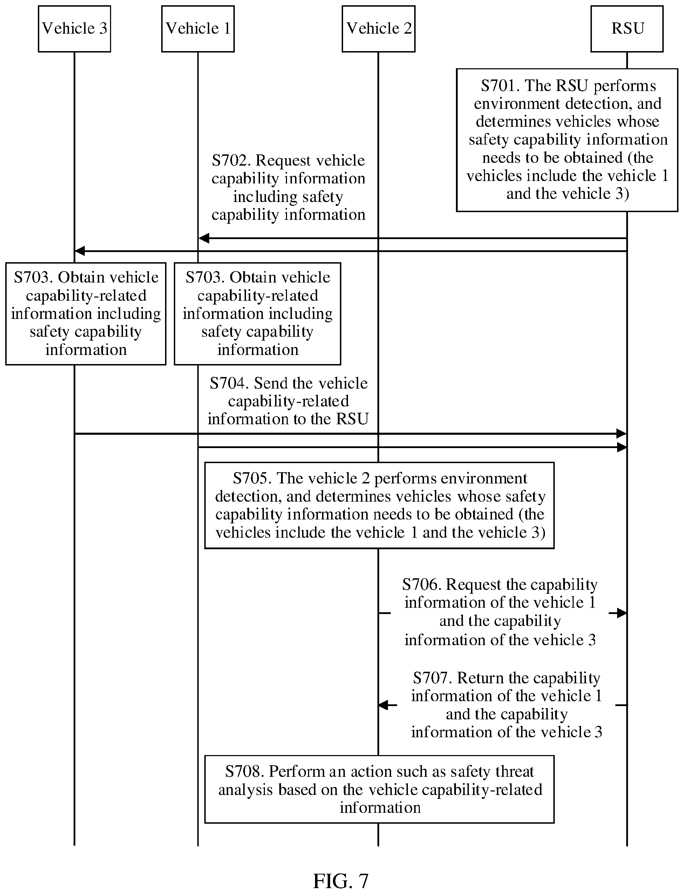

As shown in FIG. 7, a procedure of a vehicle capability exchanging method is provided. The procedure may correspond to the foregoing specific implementation in which the RSU obtains capability information of a surrounding terminal device by requesting the capability information. A vehicle 2 in the procedure is the first terminal device in the procedure shown in FIG. 3, and a vehicle 1 and a vehicle 3 each are the second terminal device in the procedure shown in FIG. 3. As shown in FIG. 7, the procedure includes the following steps.

S701: The RSU performs environment detection, and determines a vehicle whose safety capability information needs to be obtained in a safety analysis process. In the following description, an example in which vehicles whose safety capability information needs to be obtained by the RSU include the vehicle 1 and the vehicle 3 is used for description.

S702: The RSU respectively sends a request to the vehicle 1 and the vehicle 3 to obtain capability information of the vehicle 1 and capability information of the vehicle 3.

S703: The vehicle 1 and the vehicle 3 respectively obtain capability-related information of the vehicle 1 and capability-related information of the vehicle 3, where the capability-related information includes safety capability information.

For example, the vehicle 1 and the vehicle 3 may respectively obtain the capability-related information of the vehicle 1 and the capability-related information of the vehicle 3 by using sensors of the vehicle 1 and the vehicle 3 or by using inherent configuration information of the vehicle 1 and the vehicle 3. The related capability information may include a maximum braking capability, a maximum acceleration capability, and the like, which is not limited.

S704: The vehicle 1 and the vehicle 3 respectively send the capability-related information of the vehicle 1 and the capability-related information of the vehicle 3 to the RSU.

S705: The vehicle 2 performs environment detection, and determines a vehicle whose vehicle capability information needs to be obtained. For example, vehicles whose vehicle capability information needs to be obtained include the vehicle 1 and the vehicle 3.

S706: The vehicle 2 requests the capability information of the vehicle 1 and the capability information of the vehicle 3 from the RSU.

S707: The RSU sends the capability information of the vehicle 1 and the capability information of the vehicle 3 to the vehicle 2. The capability information of the vehicle 1 and the capability information of the vehicle 3 may be carried in an RSI message for transmission, may be carried in a V2X message for transmission, or the like, which is not limited.

S708: The vehicle 2 performs an action such as safety threat analysis based on the received capability information of the vehicle 1 and the received capability information of the vehicle 3. For example, the vehicle 2 may perform a more accurate action such as safety threat analysis based on the received capability information of the vehicle 1 and the received capability information of the vehicle 3 in combination with a position, a speed, and the like of the vehicle 2.

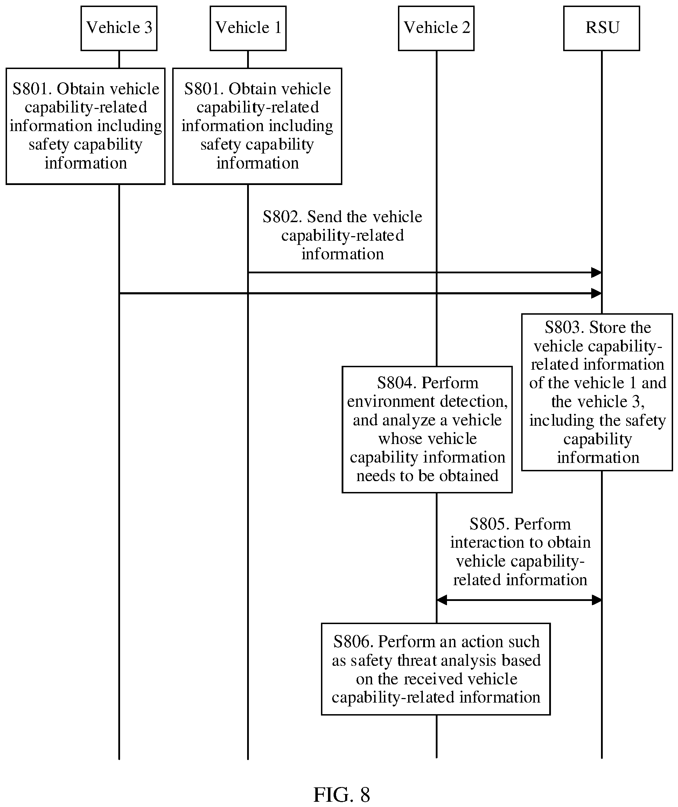

As shown in FIG. 8, a procedure of a vehicle capability exchanging method is provided. The procedure may correspond to the foregoing specific implementation in which a surrounding terminal device proactively reports capability information of the terminal device to the RSU. A vehicle 2 in the procedure may be the first terminal device in the procedure shown in FIG. 3, and a vehicle 1 and a vehicle 3 each are the second terminal device in the procedure shown in FIG. 3. As shown in FIG. 8, the procedure includes the following steps.

S801: The vehicle 1 and the vehicle 3 may respectively obtain capability-related information of the vehicle 1 and capability-related information of the vehicle 3. The capability-related information includes safety-related information such as maximum braking force and a maximum acceleration capability. The vehicle 1 and the vehicle 3 may obtain the capability-related information by using corresponding sensors, inherent configurations, or the like of the vehicle 1 and the vehicle 3.

S802: The vehicle 1 and the vehicle 3 may respectively send the capability-related information of the vehicle 1 and the capability-related information of the vehicle 3 to the RSU. For example, the capability-related information may be sent by using a roadside indication RSI message, a V2X message, or the like.

S803: The RSU stores the capability-related information of the vehicle 1 and the capability-related information of the vehicle 3.

S804: The vehicle 2 performs detection on a surrounding environment, and determines a vehicle whose safety capability information needs to be obtained in a safety threat analysis process. It should be noted that, for each vehicle, vehicle capability-related information needs to be obtained only once, and does not need to be repeatedly obtained. For example, the vehicle 2 determines, through detection on the surrounding environment, that capability information of a vehicle A and capability information of a vehicle B need to be obtained. However, if the vehicle 2 has obtained the capability information of the vehicle A before, only the capability information of the vehicle B needs to be obtained currently. In the following description, an example in which the vehicle 2 needs to obtain capability information of the vehicle 1 and capability information of the vehicle 3 is used for description.

S805: The vehicle 2 performs interaction with the RSU to obtain the capability-related information of the vehicle 1 and the capability-related information of the vehicle 3. A specific message may be a specific RSI, a separate V2X message, or the like, which is not limited.

S806: The vehicle 2 performs an action such as safety threat analysis based on the received vehicle capability information. For example, the vehicle 2 may perform more accurate safety threat analysis based on the received vehicle capability information of the vehicle 1 and the received vehicle capability information of the vehicle 3 in combination with a position, a speed, and the like of the vehicle 2.

According to the vehicle capability exchanging method, a vehicle-related capability of a vehicle, including safety capability information such as a maximum braking capability and a maximum acceleration capability, may be transmitted between different vehicles. In this manner, safety information of a surrounding vehicle can be obtained to perform accurate safety threat analysis, thereby improving driving safety. If such processing manner is not used, a vehicle may travel in an unsafe environment, resulting in a potential driving risk.

In the foregoing embodiments provided in this application, the methods provided in the embodiments of this application are separately described from a perspective of interaction between the first terminal device, the second terminal device, and the RSU. To implement functions in the methods provided in the foregoing embodiments, the first terminal device, the second terminal device, and the RSU each may include a hardware structure and/or a software module. The foregoing functions are implemented in a form of a hardware structure, a software module, or a combination of a hardware structure and a software module. Whether a function in the foregoing functions is performed by using the hardware structure, the software module, or the hardware structure and the software module depends on a particular application and design constraint condition of the technical solution.

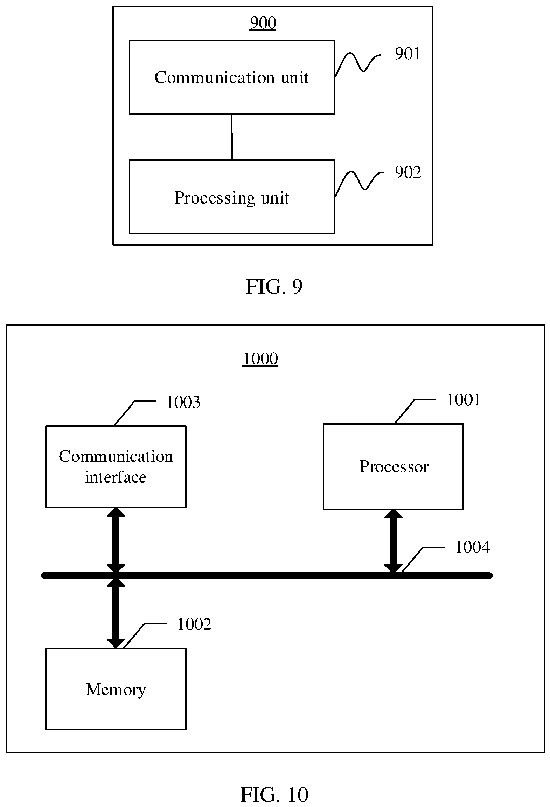

The methods provided in embodiments of this application are described above in detail with reference to FIG. 1 to FIG. 8. Apparatuses provided in embodiments of this application are described below in detail with reference to FIG. 9 and FIG. 10. It should be understood that, descriptions of the apparatus embodiments correspond to the descriptions of the method embodiments. Therefore, for content that is not described in detail, refer to the descriptions in the foregoing method embodiments.

FIG. 9 is a schematic block diagram of an apparatus 900 according to an embodiment of this application. The apparatus 900 is configured to implement a function of the first terminal device, the second terminal device, or the RSU in the foregoing methods. For example, the apparatus may be a software module or a chip system. The chip system may include a chip, or may include a chip and another discrete device. The apparatus 900 includes a communication unit 901 and may further include a processing unit 902. The communication unit 901 may communicate with an external device. The processing unit 902 is configured to perform processing, for example, plan a driving path for the first terminal device based on capability information of the second terminal device and/or perform a safety-related operation on the first terminal device. The communication unit 901 may also be referred to as a communication interface, a transceiver unit, an input/output interface, or the like. For example, the communication unit 901 may include a sending unit and/or a receiving unit. The sending unit and the receiving unit are respectively configured to perform a sending step and a receiving step that are performed by the first terminal device, the second terminal device, or the RSU in the procedures shown in FIG. 1 to FIG. 8.

In an example, the apparatus 900 may implement the steps performed by the first terminal device in the procedure shown in FIG. 3. The apparatus 900 may be the first terminal device or a chip or a circuit in the first terminal device. The first terminal device may be a vehicle or the like. The communication unit 901 is configured to perform related sending and receiving operations performed on a first terminal device side in the foregoing embodiments. The processing unit 902 is configured to perform a related processing operation performed on the first terminal device side in the foregoing method embodiments.

For example, the processing unit 902 is configured to determine the capability information of the second terminal device.

The processing unit 902 is further configured to: plan a driving path for the first terminal device and/or perform a safety-related operation on the first terminal device based on the capability information of the second terminal device; or determine a safety parameter based on the capability information of the second terminal device, where the safety parameter is used to plan a driving path for the first terminal device or perform a safety-related operation on the first terminal device.

The communication unit 901 is configured to communicate with another device, for example, the second terminal device and the RSU, which is not limited.

Optionally, when determining the capability information of the second terminal device, the processing unit 902 is specifically configured to control the communication unit 901 to receive the capability information of the second terminal device sent by the second terminal device.

Optionally, when determining the capability information of the second terminal device, the processing unit 902 is specifically configured to: control the communication unit 901 to send a first request to the second terminal device, where the first request is used to request the capability information of the second terminal device; and control the communication unit 901 to receive the capability information of the second terminal device sent by the second terminal device.

Optionally, the capability information of the second terminal device is carried in a basic safety message BSM for transmission, or the capability information of the second terminal device is carried in a vehicle-to-everything V2X message for transmission.

Optionally, when determining the capability information of the second terminal device, the processing unit 902 is specifically configured to: control the communication unit 901 to send a second request to a roadside unit RSU, where the second request is used to request the capability information of the second terminal device; and control the communication unit 901 to receive the capability information of the second terminal device sent by the RSU.

Optionally, the capability information of the second terminal device is carried in a roadside indication RSI message for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Optionally, when planning the driving path for the first terminal device based on the capability information of the second terminal device, the processing unit 902 is specifically configured to: use the capability information of the second terminal device as an input for planning control; and plan the driving path for the first terminal device based on the input for planning control.

Optionally, when performing the safety-related operation on the first terminal device based on the capability information of the second terminal device, the processing unit 902 is specifically configured to: use the capability information of the second terminal device as an input for safety threat analysis; and perform the safety-related operation on the second terminal device based on the input for safety threat analysis.

Optionally, the safety-related operation on the first terminal device includes at least one of braking the first terminal device or adjusting a speed, an acceleration, or a position of the first terminal device.

Optionally, the communication unit 901 is further configured to send a first response message to the second terminal device, where the first response message is used to respond to the capability information of the second terminal device.

In an example, the apparatus 900 may implement the steps performed by the second terminal device in the foregoing methods. The apparatus 900 may be the second terminal device or a chip or a circuit in the second terminal device. The second terminal device may be a vehicle or the like. The communication unit 901 is configured to perform related sending and receiving operations performed on a second terminal device side in the foregoing embodiments. The processing unit 902 is configured to perform a related processing operation performed on the second terminal device side in the foregoing method embodiments.

For example, the processing unit 902 may determine capability information of the second terminal device. The communication unit 901 is configured to send the capability information of the second terminal device or the like to a first terminal device or an RSU.

Optionally, when sending the capability information of the second terminal device to the first terminal device, the communication unit 901 is specifically configured to send the capability information of the second terminal device in a broadcast mode, a unicast mode, or a multicast mode.

Optionally, when sending the capability information of the second terminal device to the first terminal device, the communication unit 901 is specifically configured to: receive a first request from the first terminal device, where the first request is used to request the capability information of the second terminal device; and send the capability information of the second terminal device to the first terminal device.

Optionally, the capability information of the second terminal device is carried in a basic safety message BSM for transmission, or the capability information of the second terminal device is carried in a vehicle-to-everything V2X message.

Optionally, when sending the capability information of the second terminal device to the roadside unit RSU, the communication unit 901 is specifically configured to: receive a third request sent by the RSU, where the third request is used to request the capability information of the second terminal device; and send the capability information of the second terminal device to the RSU.

Optionally, the capability information of the second terminal device is carried in a roadside indication RSI message for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Optionally, the communication unit 901 is further configured to receive a first response message sent by the first terminal device, where the first response message is used to respond to the capability information of the second terminal device.

In an example, the apparatus 900 may implement the steps performed by the RSU in the foregoing method embodiments. The apparatus may be the RSU, a chip or a circuit in the RSU, or the like. The communication unit 901 is configured to perform related sending and receiving operations performed on an RSU side in the foregoing embodiments. The processing unit 902 is configured to perform a related processing operation performed on the RSU side in the foregoing method embodiments.

For example, the communication unit 901 is configured to: receive capability information of a second terminal device sent by the second terminal device; and send the capability information of the second terminal device to a first terminal device.

Optionally, when the communication unit 901 receives the capability information sent by the second terminal device, the processing unit 902 is specifically configured to: perform environment detection, and determine a terminal device whose capability information needs to be obtained, where the terminal device whose capability information needs to be obtained includes the second terminal device; and the communication unit 901 is configured to: send a third request to the second terminal device, where the third request is used to request the capability information of the second terminal device; and receive the capability information of the second terminal device sent by the second terminal device.

Optionally, the capability information of the second terminal device is carried in a roadside indication RSI for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Division into units in this embodiment of this application is an example, is only logical function division, and may be other division in actual implementation. In addition, functional units in the embodiment of this application may be integrated into one processor, or may exist alone physically, or two or more units may be integrated into one unit. The integrated unit may be implemented in a form of hardware, or may be implemented in a form of a software functional unit.

It can be understood that, in the foregoing embodiment, functions of the communication unit may be implemented by a transceiver, and functions of the processing unit may be implemented by a processor. The transceiver may include a transmitter, a receiver, and/or the like. The transmitter and the receiver are respectively configured to implement functions of the sending unit and the receiving unit. With reference to FIG. 10, the following provides a description by using an example.

FIG. 10 is a schematic block diagram of an apparatus 1000 according to an embodiment of this application. The apparatus 1000 in FIG. 10 may be an implementation of a hardware circuit of the apparatus shown in FIG. 9. The apparatus may be applied to the procedures in the foregoing method embodiments, and perform functions of the first terminal device, the second terminal device, or the RSU in the foregoing method embodiments. For ease of description, FIG. 10 shows only main components of the apparatus.

The apparatus 1000 shown in FIG. 10 includes at least one processor 1001. The apparatus 1000 further includes at least one memory 1002, configured to store program instructions and/or data. The memory 1002 is coupled to the processor 1001. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1001 may cooperate with the memory 1002, the processor 1001 may execute the program instructions stored in the memory 1002, and at least one of the at least one memory 1002 may be included in the processor 1001.

The apparatus 1000 may further include a communication interface 1003, configured to communicate with another device by using a transmission medium, so that the apparatus 1000 can communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrated with sending and receiving functions, an interface circuit, or the like.

It should be understood that, a connection medium between the processor 1001, the memory 1002, and the communication interface 1003 is not limited in this embodiment of this application. In this embodiment of this application, in FIG. 10, the memory 1002, the processor 1001, and the communication interface 1003 are connected by using a communication bus 1004. The bus is indicated by using a bold line in FIG. 10. A connection manner between other components is merely used as an example for description, and is not limited. The bus may include an address bus, a data bus, a control bus, and the like. For ease of representation, only one thick line is used to represent the bus in FIG. 10, but this does not mean that there is only one bus or only one type of bus.

In an example, the apparatus 1000 is configured to implement the steps performed by the first terminal device in the procedure shown in FIG. 3. The apparatus 1000 may be the first terminal device or a chip or a circuit in the first terminal device. The first terminal device may be a vehicle or the like. The communication interface 1003 is configured to perform related sending and receiving operations performed on a first terminal device side in the foregoing embodiments. The processor 1001 is configured to perform a related processing operation performed on the first terminal device side in the foregoing method embodiments.

For example, the processor 1001 is configured to determine capability information of a second terminal device. The processor 1001 is further configured to: plan a driving path for the first terminal device and/or perform a safety-related operation on the first terminal device based on the capability information of the second terminal device; or determine a safety parameter based on the capability information of the second terminal device, where the safety parameter is used to plan a driving path for the first terminal device or perform a safety-related operation on the first terminal device. The communication interface 1003 is configured to communicate with another device, for example, the second terminal device or an RSU.

Optionally, when determining the capability information of the second terminal device, the processor 1001 is specifically configured to control the communication interface 1003 to receive the capability information of the second terminal device sent by the second terminal device.

Optionally, when determining the capability information of the second terminal device, the processor 1001 is specifically configured to: control the communication interface 1003 to send a first request to the second terminal device, where the first request is used to request the capability information of the second terminal device; and control the communication interface 1003 to receive the capability information of the second terminal device sent by the second terminal device.

Optionally, the capability information of the second terminal device is carried in a basic safety message BSM for transmission, or the capability information of the second terminal device is carried in a vehicle-to-everything V2X message for transmission.

Optionally, when determining the capability information of the second terminal device, the processor 1001 is specifically configured to: control the communication interface 1003 to send a second request to a roadside unit RSU, where the second request is used to request the capability information of the second terminal device; and control the communication interface 1003 to receive the capability information of the second terminal device sent by the RSU.

Optionally, the capability information of the second terminal device is carried in a roadside indication RSI message for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Optionally, when planning the driving path for the first terminal device based on the capability information of the second terminal device, the processor 1001 is specifically configured to: use the capability information of the second terminal device as an input for planning control; and plan the driving path for the first terminal device based on the input for planning control.

Optionally, when performing the safety-related operation on the first terminal device based on the capability information of the second terminal device, the processor 1001 is specifically configured to: use the capability information of the second terminal device as an input for safety threat analysis; and perform the safety-related operation on the first terminal device based on the input for safety threat analysis.

Optionally, the safety-related operation on the first terminal device includes at least one of braking the first terminal device or adjusting a speed, an acceleration, or a position of the first terminal device.

Optionally, the communication interface 1003 is configured to send a first response message to the second terminal device, where the first response message is used to respond to the capability information of the second terminal device.

In an example, the apparatus 1000 is configured to implement the steps performed by the second terminal device in the foregoing method embodiments. The apparatus 1000 may be the second terminal device or a chip or a circuit in the second terminal device. The second terminal device may be a vehicle or the like. The communication interface 1003 is configured to perform related sending and receiving operations performed on a second terminal device side in the foregoing method embodiments. The processor 1001 is configured to perform a related processing operation performed on the second terminal device side in the foregoing method embodiments.

For example, the processor 1001 is configured to determine capability information of the second terminal device. The communication interface 1003 is configured to send the capability information of the second terminal device to a first terminal device or a roadside unit RSU.

Optionally, when sending the capability information of the second terminal device to the first terminal device, the communication interface 1003 is specifically configured to send the vehicle capability information of the second terminal device in a broadcast mode, a unicast mode, or a multicast mode.

Optionally, when sending the capability information of the second terminal device to the first terminal device, the communication interface 1003 is specifically configured to: receive a first request sent by the first terminal device, where the first request is used to request the capability information of the second terminal device; and send the capability information of the second terminal device to the first terminal device.

Optionally, the capability information of the second terminal device is carried in a basic safety message BSM for transmission, or the capability information of the second terminal device is carried in a vehicle-to-everything V2X message.

Optionally, when sending the capability information of the second terminal device to the roadside unit RSU, the communication interface 1003 is specifically configured to: receive a third request sent by the RSU, where the third request is used to request the capability information of the second terminal device; and send the capability information of the second terminal device to the RSU.

Optionally, the capability information of the second terminal device is carried in a roadside indication RSI message for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Optionally, the communication interface 1003 is configured to receive a first response message sent by the first terminal device, where the first response message is used to respond to the capability information of the second terminal device.

In an example, the apparatus 1000 is configured to implement the steps performed by the RSU in the foregoing method embodiments. The apparatus 1000 may be the RSU or a chip or a circuit in the RSU. The communication interface 1003 is configured to perform related sending and receiving operations performed on an RSU side in the foregoing method embodiments. The processor 1001 is configured to perform a related processing operation performed on the RSU side in the foregoing method embodiments.

For example, the communication interface 1003 is configured to: receive capability information of a second terminal device sent by the second terminal device; and send the capability information of the second terminal device to a first terminal device.

Optionally, when receiving the capability information of the second terminal device sent by the second terminal device, the communication interface 1003 is specifically configured to: send a third request to the second terminal device, where the third request is used to request the capability information of the second terminal device; and receive the capability information of the second terminal device sent by the second terminal device.

Optionally, the capability information of the second terminal device is carried in a roadside indication RSI for transmission, or the capability information of the second terminal device is carried in a vehicle-to-everything V2X message for transmission.

Optionally, the capability information of the second terminal device includes indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

Further, an embodiment of this application further provides an apparatus, including units configured to perform steps in the method described in any one of the flowcharts in FIG. 3 to FIG. 8. Alternatively, the apparatus includes at least one processor and an interface circuit, where the at least one processor is configured to communicate with another apparatus by using the interface circuit, and perform the method described in any one of the flowcharts in FIG. 3 to FIG. 8 in the foregoing embodiments. Alternatively, the apparatus includes a processor, configured to invoke a program stored in a memory to perform the method described in any one of the flowcharts in FIG. 3 to FIG. 8 in the foregoing embodiments in this application. An embodiment of this application further provides a computer-readable storage medium including a program. When the program is executed, the method described in any one of the procedures in FIG. 3 to FIG. 8 is performed.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed in embodiments of this application may be directly performed by a hardware processor, or may be performed by using a combination of hardware and software modules in the processor.

In this embodiment of this application, the memory may be a non-volatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can be used to carry or store desired program code in a form of an instruction or a data structure and that can be accessed by a computer, but is not limited thereto. The memory in embodiments of this application may alternatively be a circuit or any other apparatus that can implement a storage function, and is configured to store program instructions and/or data.

The methods provided in embodiments of this application may be all or partially implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, a network device, user equipment, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that, persons skilled in the art can make various modifications and variations to this application without departing from the scope of this application. This application is intended to cover these modifications and variations of this application provided that they fall within the scope of protection defined by the following claims and their equivalent technologies.

In embodiments of this application, "at least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

## Claims

1. A communication method, comprising:
determining, by a first terminal device, capability information of a second terminal device; and
planning, by the first terminal device, a driving path for the first terminal device and/or performing a safety-related operation on the first terminal device, based on the capability information of the second terminal device.

2. The method according to claim 1, wherein the determining, by a first terminal device, capability information of a second terminal device comprises:
receiving, by the first terminal device, the capability information of the second terminal device that is sent by the second terminal device.

3. The method according to claim 1, wherein the determining, by a first terminal device, capability information of a second terminal device comprises:
sending, by the first terminal device, a first request to the second terminal device, wherein the first request is used to request the capability information of the second terminal device; and
receiving, by the first terminal device, the capability information of the second terminal device that is sent by the second terminal device.

4. The method according to claim 2 or 3, wherein the capability information of the second terminal device is carried in a basic safety message BSM for transmission, or the capability information of the second terminal device is carried in a vehicle-to-everything V2X message for transmission.

5. The method according to claim 1, wherein the determining, by a first terminal device, capability information of a second terminal device comprises:
sending, by the first terminal device, a second request to a roadside unit RSU, wherein the second request is used to request the capability information of the second terminal device; and
receiving, by the first terminal device, the capability information of the second terminal device that is sent by the RSU.

6. The method according to claim 5, wherein the capability information of the second terminal device is carried in a roadside indication RSI message for transmission, or the capability information of the second terminal device is carried in a vehicle-to-everything V2X message for transmission.

7. The method according to any one of claims 1 to 6, wherein the capability information of the second terminal device comprises indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

8. The method according to any one of claims 1 to 7, wherein the planning, by the first terminal device, a driving path for the first terminal device based on the capability information of the second terminal device comprises:
using, by the first terminal device, the capability information of the second terminal device as an input for planning control; and
planning, by the first terminal device, the driving path for the first terminal device based on the input for the planning control.

9. The method according to any one of claims 1 to 7, wherein the performing, by the first terminal device, a safety-related operation on the first terminal device based on the capability information of the second terminal device comprises:
using, by the first terminal device, the capability information of the second terminal device as an input for safety threat analysis; and
performing, by the first terminal device, the safety-related operation on the first terminal device based on the input for the safety threat analysis.

10. The method according to any one of claims 1 to 9, wherein the safety-related operation on the first terminal device comprises at least one of braking the first terminal device or adjusting a speed, an acceleration, or a position of the first terminal device.

11. The method according to any one of claims 1 to 10, wherein the method further comprises:
sending, by the first terminal device, a first response message to the second terminal device, wherein the first response message is used to respond to the capability information of the second terminal device.

12. A communication method, comprising:
determining, by a second terminal device, capability information of the second terminal device; and
sending, by the second terminal device, the capability information of the second terminal device to a first terminal device or a roadside unit RSU.

13. The method according to claim 12, wherein the sending, by the second terminal device, the capability information of the second terminal device to a first terminal device comprises:
sending, by the second terminal device, the vehicle capability information of the second terminal device in a broadcast mode, a unicast mode, or a multicast mode.

14. The method according to claim 12, wherein the sending, by the second terminal device, the capability information of the second terminal device to a first terminal device comprises:
receiving, by the second terminal device, a first request sent by the first terminal device, wherein the first request is used to request the capability information of the second terminal device; and
sending, by the second terminal device, the capability information of the second terminal device to the first terminal device.

15. The method according to claim 13 or 14, wherein the capability information of the second terminal device is carried in a basic safety message BSM for transmission, or the capability information of the second terminal device is carried in a vehicle-to-everything V2X message.

16. The method according to claim 12, wherein the sending, by the second terminal device, the capability information of the second terminal device to a roadside unit RSU comprises:
receiving, by the second terminal device, a third request sent by the RSU, wherein the third request is used to request the capability information of the second terminal device; and
sending, by the second terminal device, the capability information of the second terminal device to the RSU.

17. The method according to claim 16, wherein the capability information of the second terminal device is carried in a roadside indication RSI message for transmission, or the capability information of the second terminal device is carried in a vehicle-to-everything V2X message for transmission.

18. The method according to any one of claims 12 to 17, wherein the capability information of the second terminal device comprises indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

19. The method according to any one of claims 12 to 18, wherein the method further comprises:
receiving, by the second terminal device, a first response message sent by the first terminal device, wherein the first response message is used to respond to the capability information of the second terminal device.

20. A communication method, comprising:
receiving, by a roadside unit RSU, capability information of a second terminal device that is sent by the second terminal device; and
sending, by the RSU, the capability information of the second terminal device to a first terminal device.

21. The method according to claim 20, wherein the receiving, by a roadside unit RSU, capability information of a second terminal device that is sent by the second terminal device comprises:
performing, by the RSU, environment detection, and determining a terminal device whose capability information needs to be obtained, wherein the terminal device whose capability information needs to be obtained comprises the second terminal device;
sending, by the RSU, a third request to the second terminal device, wherein the third request is used to request the capability information of the second terminal device; and
receiving, by the RSU, the capability information of the second terminal device that is sent by the second terminal device.

22. The method according to claim 20 or 21, wherein the capability information of the second terminal device is carried in a roadside indication RSI message for transmission, or the capability information of the second terminal device is carried in a vehicle-to-everything V2X message for transmission.

23. The method according to any one of claims 20 to 22, wherein the capability information of the second terminal device comprises indication information of at least one of a maximum acceleration, a maximum braking capability, an acceleration range, an acceleration change rate range, a steady-state acceleration deviation, a dynamic acceleration deviation, a steady-state acceleration change rate range, an acceleration response delay time, an acceleration stabilization time, braking pressure precision, a maximum braking delay, a braking pressure cycle, or a braking pressure resolution of the second terminal device.

24. An apparatus, comprising units configured to perform the steps in the method according to any one of claims 1 to 23.

25. An apparatus, comprising at least one processor and an interface circuit, wherein the at least one processor is configured to: communicate with another apparatus through the interface circuit, and perform the method according to any one of claims 1 to 23.

26. An apparatus, comprising a processor, configured to invoke a program stored in a memory, to perform the method according to any one of claims 1 to 23.

27. A computer-readable storage medium, comprising a program, wherein when the program is executed by a processor, the method according to any one of claims 1 to 23 is performed.
